# EUROPEAN PATENT SPECIFICATION

(11) **EP 1 119 211 B1**
(45) Date of publication and mention of the grant of the patent: **17.11.2004**
(21) Application number: 00116787.3
(22) Date of filing: 03.08.2000
(51) Int. Cl.: H04Q 7/38, H04L 29/08

(54) **Method and system for providing location-specific services to GSM/PCS subscribers**
Verfahren und System zum Anbieten von positionsabhängigen Diensten an GSM/PCS Teilnehmer
Procédé et système pour fournir des services dépendants de la position aux abonnés GSM/PCS

(30) Priority: 19.01.2000 US 176831 P; 03.04.2000 US 543095
(43) Date of publication of application: 25.07.2001
(73) Proprietor: Hertel, Joachim, Alpharetta, Georgia 30022-7172 (US)
(72) Inventor: Hertel, Joachim, Alpharetta, Georgia 30022-7172 (US)
(74) Representative: Grünecker, Kinkeldey, Stockmair & Schwanhäusser Anwaltssozietät

(56) References cited:
- WO-A-01/43390
- WO-A-99/27742
- EUROPEAN TELECOMMUNICATIONS STANDARDS INSTITUTE, ETSI 1999: "Digital Cellular Telecommunications System (Phase 2+); Location Services (LCS); Service Description, Stage 1 (GSM 02.71 version 7.0.0 Release 1998) ETSI TS 101 723" ETSI STANDARDS TECHNICAL SPECIFICATION, [Online] 1 August 1999 (1999-08-01), XP002202246 Retrieved from the Internet: <URL:www.etsi.org> [retrieved on 2002-06-14]
- EUROPEAN TELECOMMUNICATIONS STANDARDS INSTITUTE, ETSI : "Digital Cellular Telecommunications System (Phase 2+); Location Services (LCS); Functional Description, Stage 2 (GSM 03.71 version 7.0.0 Release 1998) ETSI TS 101 724" ETSI STANDARDS TECHNICAL SPECIFICATION, [Online] 1 August 1999 (1999-08-01), XP002202247 Retrieved from the Internet: <URL:www.etsi.org> [retrieved on 2002-06-14]
- FUJINO N ET AL: "MOBILE INFORMATION SERVICE BASED ON MULTI-AGENT ARCHITECTURE" IEICE TRANSACTIONS ON COMMUNICATIONS, INSTITUTE OF ELECTRONICS INFORMATION AND COMM. ENG. TOKYO, JP, vol. E80-B, no. 10, 1 October 1997 (1997-10-01), pages 1401-1406, XP000734533 ISSN: 0916-8516
- SIEMENS AG, INFORMATION AND COMMUNICATION NETWORKS, 1999: "Mobile Application Solutions based on Wireless Application Protocol (WAP)" SIEMENS AG FLIER, [Online] 1999, XP002202248 Retrieved from the Internet: <URL:http://www2.siemens.no/ICN/Prosjekter /tjenester/wap/> [retrieved on 2002-06-14]

## Description

The present invention relates generally to cellular telecommunications systems and, more specifically, to delivering precise-location- and/or user-specific services to users of mobile equipment within a GSM/PCS cellular system.

The GSM standards specify the infrastructure for a digital cellular service. To ensure interoperability among GSM systems, the standards address parameters such as the radio interface (900 MHz, 1800 MHz or 1900 MHz), switching, signaling, and intelligent network features.

GSM subscriber-related data is carried on a Subscriber Identity Module ("SIM") card installed or inserted in the phone or other mobile equipment. The SIM card allows a user to place a cellular telephone call from any valid mobile equipment, since the subscriber data is used to complete the call rather than the mobile equipment's serial number.

The Wireless Application Protocol ("WAP") is a standard protocol for the delivery of services from the Internet to users of wireless mobile equipment over cellular wireless networks. WAP establishes a protocol common to all mobile equipment manufacturers for the presentation of information on the small display screens that are characteristic of mobile equipment. WAP servers can deliver information via "cards" to mobile equipment using the Wireless Markup Language ("WML"), which is a modification of standard hypertext markup language ("HTML") (cards are analogized to HTML pages) for use with mobile equipment. WML allows users to access the Internet and send and receive email via the mobile equipment.

Technology for locating mobile stations in wireless networks is known. For example, United States Patent No. 5,907,809 to Molnar et al. ("Molnar") describes the use of an array of spot beams directed near a mobile user to determine mobile user position by measuring the relative power received from the mobile user in each spot beam. *Molnar* teaches determining the location of a mobile station at any point in time as precisely as possible without requiring any interaction between the mobile subscriber and the cellular system. This enables location-sensitive public security services (such as for locating suspicious or fraudulent mobile stations), enables location dependent emergency services (such as 911 services under the assumption that the caller cannot actively cooperate), and provides a technical solution for network routing or tracking purposes (such as fleet management).

Technology also exists to provide location-specific services to mobile subscribers at the location area level. For example, it is known to provide a WML card listing of all of the restaurants located within a location area to a mobile subscriber in response to a request from the subscriber. This conventional system provides location-specific services at a geographical resolution level of the location area.

Known GSM/PCS technologies, such as the ETSI LCS framework GSM 02.71 described in ETSI TS 101 723 and one of its actual embodiments as disclosed in WO-A-9927742 are designed to obtain a reasonable approximation to the actual physical location of the caller as determined by network elements such as BSC, BTS, MSC and MPC.

Unfortunately, these known technologies fail to teach a solution to navigate within logical locations such as a floor within a building, an aisle within a store, or a shelf within an aisle of a store and to request customized services attached to these logical locations, such as "locate the shelf that contains item X" or "open the door X on floor 5 in building A".

Furthermore, known technologies for locating mobile stations in cellular systems do not enable mobile subscribers to receive precise, location-specific interactive services through the cellular network. The prior art fails to teach a solution to the problem of determining the location of a mobile subscriber more precisely than at the level of the location area. Consequently, there exists a need for a technology that can deliver services that are specific to individual locations and individual users within a location area.

The present invention provides a system and method for providing location specific services over a GSM/PCS standard network in a client/server environment, the client being a standard GSM/PCS mobile phone, wherein the. server comprises a entity relationship model and the entity relationship model provides at least one entity representing physical objects the entity having a recursive internal structure to describe details of the represented physical objects and at least one executable service procedure related to the entity both the entity and the related service procedure linked in a one-to-many relationship to standard user account and location information.

According to one aspect of the invention, a client/server-based method and system is provided for registering, ordering and using location- and user-specific services in a GSM/PCS cellular communications system. According to one aspect of the invention, a server for delivering location- and user-specific services over a digital cellular communications system to users of WAP-enabled mobile equipment is provided. The server includes an entity relationship model (ERM) component that defines the relationships between a user account, the mobile subscription, and a mobile equipment location. A server engine operates on the ERM component, operates on a service request from the mobile equipment, and generates a communication based on the results of the ERM component operation. The server has an interface that accepts the service request from and delivers the communication to the mobile equipment.

According to a further aspect of the invention, the client system is a WAP-enabled, GSM-compatible telephone logged onto a GSM 900/1800 or PCS 1900 telecommunications network. The application server is either a combination of a WAP gateway with a standard web server or a stand-alone WAP application server. The application server elements may be interlinked via an IP network and may access a database. The database stores user, mobile subscription, location, and service data according to the entity relationship model.

According to another aspect of the invention, a location-based information service can be delivered to a WAP-enabled mobile equipment. A mobile equipment identification and a location are received at an applications server. In response to the mobile subscription identification and the location, a determination is made whether the mobile subscription is entitled to receive the information service. The information service is built using the mobile subscription identification and the location. In turn, the information service is delivered to the mobile equipment for presentation to the user.

A user of the location-specific application server system can create and maintain a valid account and register location preferences for one or many GSM/PCS networks. This activity is typically completed via a secure e-commerce website. Once the account and the location preferences are activated, the user can order and use location and user-specific services by invoking a specific transaction flow when the user is located within a location area that contains a geographical item of interest, such as a building, an airport, a landmark, or a street. The invocation results in a service dialog between the client (the WAP-enabled GSM phone) and the application server (either directly or through the WAP gateway). The application server operating on the ERM completes authorization and other consistency checks as well as controlling the service transaction.

In support of the inventive client/server-based system, a computer-readable medium can be provided that has data fields organized within a data structure. The medium comprises an account data field that contains data representing a mobile equipment user and a user account; a subscription identification data field that contains data representing the wireless subscription; a location data field that contains data representing a location area; and a services logic field with logic for delivering a service to the user through the wireless mobile equipment based on the data fields.

In view of the foregoing, it will be understood that the invention deliver services that are unique to specific geographical items located within a location area and tailored to the particular mobile equipment user.

Preferred embodiments of the present invention will be described in the following in connection with the accompanying drawings which show:
**FIG. 1** is a perspective view illustrating a mobile equipment user at a specific geographical item within a location area of a cellular system.
**FIG. 2** is a schematic diagram illustrating a client-server system according to an exemplary embodiment of the invention.
**FIG. 3** is a schematic diagram illustrating a WAP network architecture with a GSM/WAP mobile station connecting to a web application server via a WAP gateway according to an exemplary embodiment of the invention.
**FIG. 4** is a schematic diagram illustrating a WAP network architecture with a GSM/WAP mobile station directly connecting to a WAP application server according to an exemplary embodiment of the invention.
**FIG. 5** is a flow diagram illustrating the steps in a method for providing a list of location-specific geographical items to a mobile subscriber according to an exemplary embodiment of the invention.
**FIG. 6** illustrates a representative mobile equipment screen displaying a list of available location-specific geographical items to a mobile subscriber according to an exemplary embodiment of the invention.
**FIG. 7** is a flow diagram illustrating the steps in a method for offering location-specific services associated with geographical items to a mobile subscriber according to an exemplary embodiment of the invention.
**FIG. 8** illustrates a representative mobile equipment screen displaying a list of available location-specific services associated with a geographical item to a mobile subscriber according to an exemplary embodiment of the invention.
**FIG. 9** is a flow diagram illustrating the steps in a method for performing a service dialog with a mobile subscriber according to an exemplary embodiment of the invention.
**FIG. 10** illustrates a representative mobile equipment screen displaying the results of a service dialog between a server system and a mobile subscriber according to an exemplary embodiment of the invention.

The present invention is directed to providing location-specific and/or user-specific services to users of cellular system mobile equipment. Although the preferred embodiment of the invention will be described with respect to providing services to users in a GSM cellular system, those skilled in the art will recognize that the invention may be utilized in connection with providing location-specific or user-specific services to mobile subscribers within a variety of mobile communications system environments. Other conventional mobile communication systems include DCS, PCS and AMPS cell-based wireless systems.

The exemplary embodiments are based on the assumption that the mobile station equipment of interest is primarily used for basic telephony services and that the exact location is not of interest to the mobile subscriber unless and until the subscriber requests location-specific information in a particular situation. For example, when the subscriber is entering an airport building, standing in front of a historic landmark, or simply asking for guidance to walk from street A to street B in a foreign city, location-specific services become of interest to the subscriber. A mobile subscriber can be integrated with the cellular network in an interactive way, thereby enabling the subscriber to register, order or use location- or user-specific services on demand.

The following cellular system and server components can be deployed in an exemplary embodiment of the invention. The GSM standards referenced are accessible via the Internet's World Wide Web at http://www.etsi.org.
- GSM 900, DCS 1800, or PCS 1900 telecommunication networks;
- a GSM 11.11 or optionally GSM 11.14 compliant SIM smart card;
- a WAP-enabled GSM phase 2+ compliant mobile equipment;
- a wireless Internet connection as specified by the WAP standard;

A computer-based information processing server system can include either (1) a web server that interfaces through a WAP gateway over the GSM system to a mobile equipment subscriber, or (2) a WAP application server that interfaces directly over the GSM system to a subscriber. A database system can be interconnected to the web server or WAP application server.

The application server advantageously includes a specific entity relationship model ("ERM") and a specific flow of transaction logic initiated by the mobile subscriber in order to register, order, and use location- and user-specific services. The ERM implements the rules that define the relationships among the various data elements and establishes a structure for the delivery of services by the system to the mobile subscriber. The database may be implemented as a relational or object-oriented database, as is known in the art.

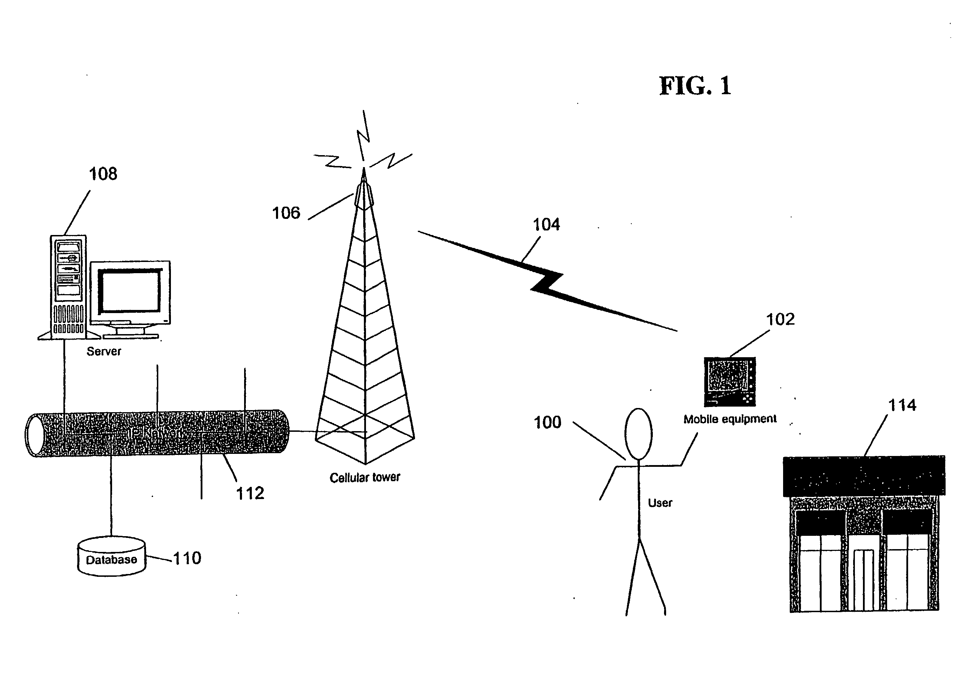

Turning now to the drawings, in which like numerals indicate like elements throughout the several figures, exemplary embodiments of the invention will now be described in detail. FIG. 1 depicts the user or subscriber **100** of a WAP-enabled cellular telephone or other mobile equipment **102**. The user communicates via the mobile equipment **102**, also described as a mobile station, over a radio link **104** to cellular tower **106**. Cellular tower **106** provides coverage of one or several location areas in a cellular system. An application server **108** accesses database **110** and provides services to the subscriber **100** through the cellular system over IP network **112**. These services can be specific to particular geographical items **114** located within a particular location area that is served by cellular tower **106**.

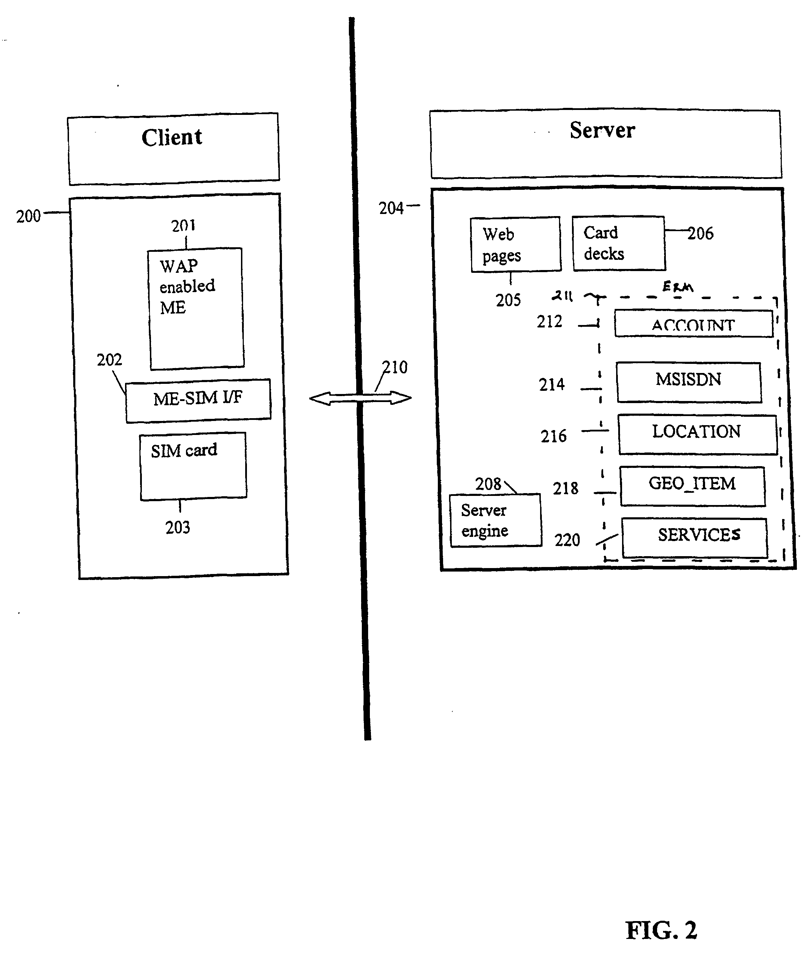

A schematic diagram is provided in FIG. 2 that illustrates a client-server system according to one embodiment of the invention. Referring now to FIGs. 1 and 2, the client system **200** includes a GSM/WAP enabled mobile equipment (ME) **201** and a SIM card **203.** The mobile equipment **201** operates on the GSM-specified interface between the ME **201** and the SIM ("ME-SIM interface") **202**.

The client **200** uses a standard GSM/WAP protocol stack **210,** as is known in the art, to communicate with the server system **204**. The server system **204** generates or contains web pages **205**, a server engine **208**, and a memory having a data structure with several data entities **212, 214, 216, 218, 220.** These data entities are related to each other by relationships defined in an ERM **211.** The server system **204** may also generate or contain wireless markup language card decks **206.**

The entity ACCOUNT **212** represents data necessary to uniquely describe a user **100** and the user's payment and billing information (such as the subscriber's name, address, credit card, etc.). An individual account is created and maintained through a secure web site by using a unique UserId and Password, as is known in the art.

The entity MSISDN **214** represents a mobile station ISDN number representing a wireless subscription as defined by the GSM standards available at http://www.etsi.org.

The entity LOCATION **216** represents a location area as specified by the GSM standards.

The entity GEO_ITEM **218** represents any physical object, such as a geographical item **114**, located in a given location area within the coverage area of cellular tower **106**. Examples of possible geographical items include buildings, streets, airports, and landmarks. GEO_ITEMs **218** may have a complicated, recursive internal structure to describe details like a floor in a building, a store in a mall, a specific position on a street, a gate in an airport building, or other geographic detail.

The entity SERVICES **220** represents available logic and/or content stored in database **110** for a given GEO_ITEM. Services are delivered to subscribers by application server **108** and may have descriptive names and data, but typically comprise executable software logic elements.

Between these entities, the following exemplary relations are maintained in the ERM **211,** as shown in Table I.

**TABLE I**

| ACCOUNT: MSISDN = 1:n; i.e. one ACCOUNT must have one or multiple MSISDNs attached, but a MSISDN is attached to exactly one ACCOUNT. |
|---|
| MSISDN: LOCATION = n: m (n >= 1, m >= 1) |
| |
| LOCATION: GEO_ITEM = 1:n |
| |
| GEO_ITEM: SERVICE = n: m (n >= 1, m >= 1) |

The server engine **208** receives requests from the client **200.** The server engine **208** then operates on the entity relation model **211,** and prepares web pages **205** and/or WML card decks **206** and delivers them to the client **200**. Depending on the service specific logic, the server engine **208** might use push technology to send information to the client at a time during which a service is in use by the client **200**.

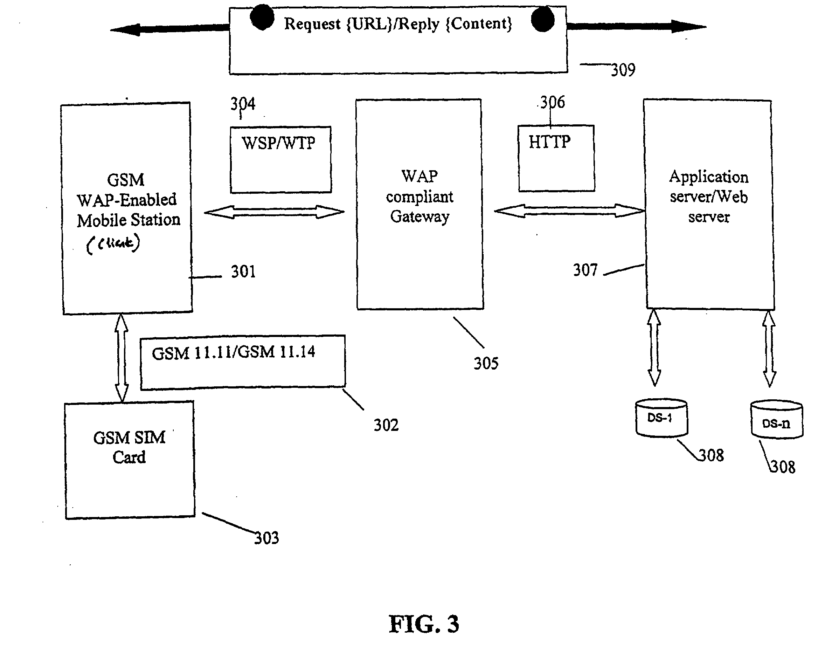

FIG. 3 illustrates a client-server architecture in which the server **307** communicates with the mobile station **301** operating as a client through a WAP-compliant gateway **305.** Referring now to FIGs. 1-3, the client is embodied as a GSM phase 2+ compliant mobile station equipment **301**, as specified in the GSM specifications. The client is also WAP-enabled according to the WAP specifications available at http://www.wapforum.org, and is attached to a GSM 11.11 or a GSM 11.14 compliant SIM card **303.** The ME-SIM interface **302** is compliant to GSM 11.11, and may also be compliant to GSM 11.14, as specified in the GSM specifications.

The mobile station **301** communicates via the GSM/WAP protocol **304** with a WAP-compliant gateway **305** which, in turn, communicates via the Internet hypertext transfer protocol ("HTTP") with a Web server or application server **307**. The data stores DS1 through DSn **308** implement the entity relationship model in a relational or object-oriented database.

The logical end-to-end communication channel **309** between mobile station **301** and server **307** can be specified as a series of requests from the mobile equipment client **301** to the server **307**, each containing a uniform resource locator ("URL") and/or user data. Corresponding replies, including data, are sent by the server **307** to the mobile station **301**.

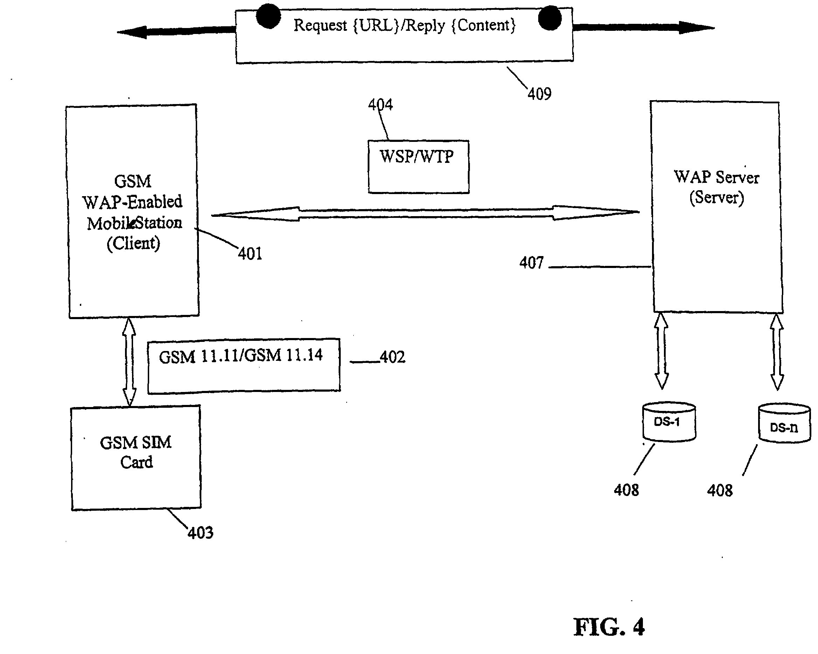

FIG. 4 illustrates an exemplary embodiment of the client-server architecture in which a WAP-compliant server **407** communicates directly with a mobile station **401** operating as a client. Referring now to FIGs. 1, 2 and 4,. the client is embodied as a GSM phase 2+ compliant mobile station **401,** as specified in the GSM specifications. The client is also WAP-enabled and has a GSM 11.11 or a GSM 11.14 compliant SIM card **403** attached. The ME-SIM interface **402** is compliant with GSM 11.11 and may also be compliant to GSM 11.14.

The mobile station **401** communicates using the GSM/WAP protocol **404** with WAP server **407.** The databases DS1 through DSn **408** implement the entity relationship model in a relational or object-oriented database.

The logical end-to-end communications channel **409** between mobile station **401** and WAP server **407** can be specified as a series of requests from the mobile equipment client to the server, each containing a URL and/or user data. Corresponding replies are sent by the WAP server **407** to the mobile station **401** and include data.

The account data needed to create a user account, as represented by the entity ACCOUNT **212,** can include a UserID and Password, a UserName and Address, user credit card information, and user MSISDN information. Collectively, these data elements define a valid account. It is then optional for the user to specify location preferences.

Once a valid account is established by the system, the user can specify the user's specific location within a location area of the cellular system. For example, the user may specify that he or she is at the airport or another geographical item. The typical structure of the relationships between user locations and services is as follows: there are one or more GSM networks available to the user; for each GSM network, there are one or more location areas; for each location area, there are one or more geographical items; and for each geographical item, there are one or more services available.

To make the data entry and maintenance of the user's location preferences more convenient, reasonable default values may be used. One skilled in the art will appreciate that various default values may be specified in order to optimize the maintenance of accounts and location preferences.

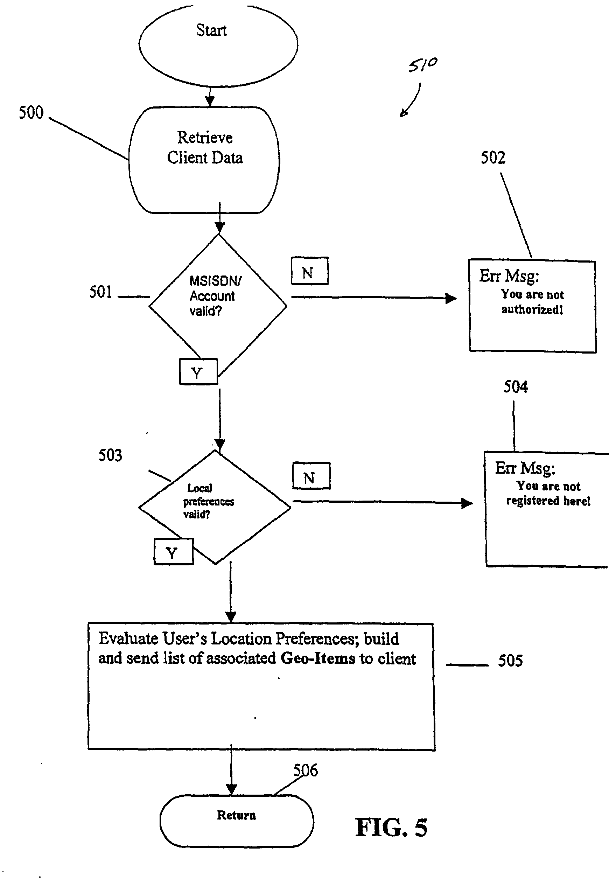

FIG. 5 is a flow diagram illustrating the steps in an exemplary method for providing location-specific geographical items to a mobile subscriber according to the status of the user account and the user-specific location preferences. Among other functions, the flow diagram of FIG. 5 defines the authorization and consistency checks that are performed by the server.

Referring now to FIGs. 1-5, in step **500**, the server **204** retrieves the client data from the client **200** to initiate the exemplary routine **510**. The data preferably includes the client's MSISDN and the current location given by the parameter MCC_MNC_LAC or MCC_MNC_LAC_CI as specified in the GSM specification. In step **501**, the server **204** evaluates the client's MSISDN. According to the rules implemented in the ERM **211**, the server **204** can check if the MSISDN is attached to a valid account. If not, the "No" branch is followed from step **501** to step **502.** An error message is sent at step **502** to the client **200,** and the routine **510** terminates. The client **200** may, for example, display a message to the user indicating that service has been denied.

If, at step **501,** the MSISDN is attached to a valid account, then the "Yes" branch is followed to step **503**. The server **204** evaluates in step **503** the current location of the client **200**. This evaluation of current location can be completed in the form of a location area code MCC_MNC_LAC or MCC_MNC_LAC_CI (per the GSM specification). According to the ERM, the server **204** checks the location preferences of the client **200**, based on the validated account/MSISDN information. If it is determined by the server **204** that the client **200** is entitled to use service in this particular geographical area, then the "Yes" branch is followed from step **503** to step **505**. The client **200** may be entitled to receive service both when the user is logged onto the user's home network as well as when the user is roaming in a foreign network.

If the server **204** determines at step **503** that the user is not entitled to use location-based services in that particular geographical location, the "No" branch is followed to step **504**. An error message is sent in step **504** indicating that the client **200** cannot proceed. For example, the client **200** may display a message for the user indicating that the user is not registered for service at that particular location. The routine **510** terminates upon the transmission of this error message.

At step **505**, the server **204** compiles a list of available geographical items that are located in the area of the user **100** and sends that list back to the client **200** in the form of a web page **205** or a WML card **206.** The routine **510** terminates at step **506.**

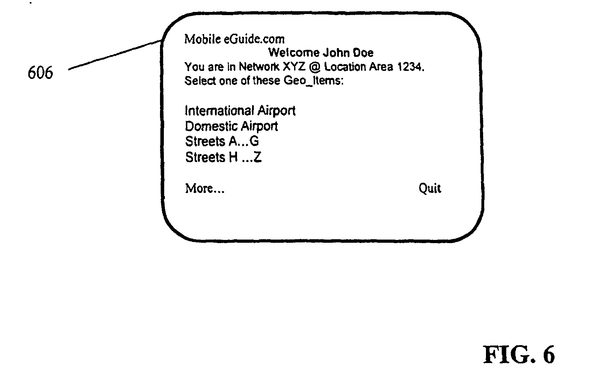

FIG. 6 illustrates a representative mobile equipment screen displaying a list of location-specific geographical items that are available in the location area of the mobile subscriber. Referring now to FIGs. 1-6, message display **606** may be displayed on mobile equipment **102** at step **505** of the exemplary routine **510** shown in FIG. 5. According to one embodiment, the message display **606** is rendered by server **204** to a user **100** with a valid account when that user enters a particular location area. The geographical items within that location area (for example, the international airport terminal, the domestic airport terminal, streets A-G, and streets H-Z) are presented to the user **100** so that the user can subsequently select location specific services associated with one or more of those geographical items.

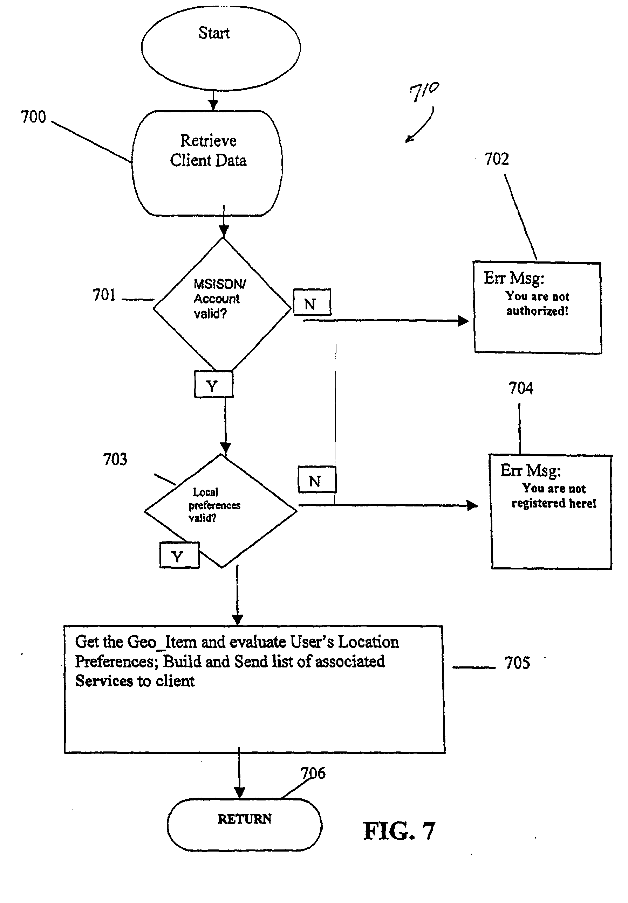

FIG. 7 is a flow diagram illustrating the steps in an exemplary method for offering location-specific services associated with geographical items to a mobile subscriber. The exemplary method permits the user to specify particular geographical items within a location area in order to use a particular location dependant service. The flow diagram also defines the authorization and consistency checks performed by the server.

Referring now to FIGs. 1-5 and 7, the exemplary routine **710** begins at step **700**, at which step the server **204** retrieves the client data from the client **200**. The data preferably includes the client's MSISDN and the current location given by the parameter MCC_MNC_LAC or MCC_MNC_LAC_CI (as specified in the GSM specification). In step **701,** the server **204** evaluates the client's MSISDN. According to the rules implemented in the ERM **211,** the server **204** can conduct an inquiry to determine whether the MSISDN is attached to a valid account. If not, the "No" branch is followed from step **701** to step **702.** An error message is sent at step **702** to the client **200**, and the routine **710** terminates. The client **200** may, for example, display a message to the user indicating that the user is not authorized to access interactive services.

If, at step **701,** it is determined that the MSISDN is attached to a valid account, then the "Yes" branch is followed to step **703.** The server **204** evaluates in step **703** the current location of the client **200,** in the form of a location area code MCC_MNC_LAC or MCC_MNC_LAC_CI (per the GSM specification). According to the ERM **211,** the server **204** checks the location preferences of the client, based on the validated account and MSISDN information. If it is determined by the server **204** that the client **200** is entitled to access services in this particular geographical area, then the "Yes" branch is followed from step **703** to step **705**. The client **200** may be entitled to receive service both when the user is logged on in the user's home network as well as when the user is roaming in a foreign network.

If the server **204** determines at step **703** that the user is not entitled to use location-based services in that particular geographical location, the "No" branch is followed to step **704.** An error message is sent in step **704** indicating that the client **200** cannot proceed with the requested operation. For example, the client **200** may display a message to the user indicating that the user is not registered for service at that particular location.

Steps **700-703** are preferably completed, even though account validation and local preferences validation steps were performed in steps **500-503** of FIG. 5, because the mobile equipment **102** is typically a moving object and may have moved outside the original location area. Moreover, the mobile equipment **102** may have switched to a different MSISDN if the user has a multi-MSISDN GSM subscription.

At step **705,** the server **204** evaluates the Geo_Item that the user selected from the list rendered by the server. The Geo_Item is checked against the user's location preferences, and a list of available services that are associated with that Geo_Item is then compiled and rendered for client evaluation and selection. Alternatively, the list of available services may be pushed to the client **200** from the server **204** without requiring a client request to initiate the information transfer. The method then terminates at step **706**.

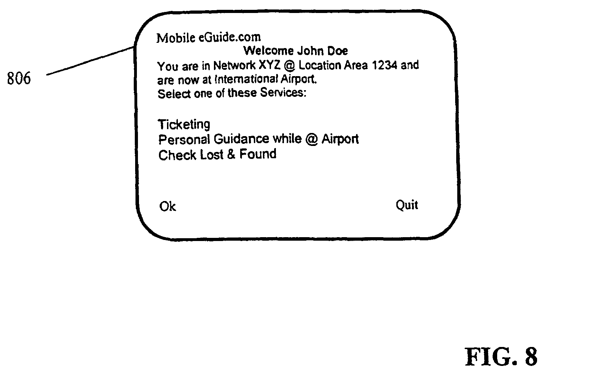

FIG. 8 illustrates a representative mobile equipment screen displaying a list of available location-specific services associated with a geographical item to a mobile subscriber. Referring now to FIGs. 1, 2, 7, and 8, message display **806** shows a mobile equipment screen display of the list rendered by the server **204** in step **705**. The available services associated with the geographical item selected by the user **100** are presented for consideration and selection by the user in this representative screen display.

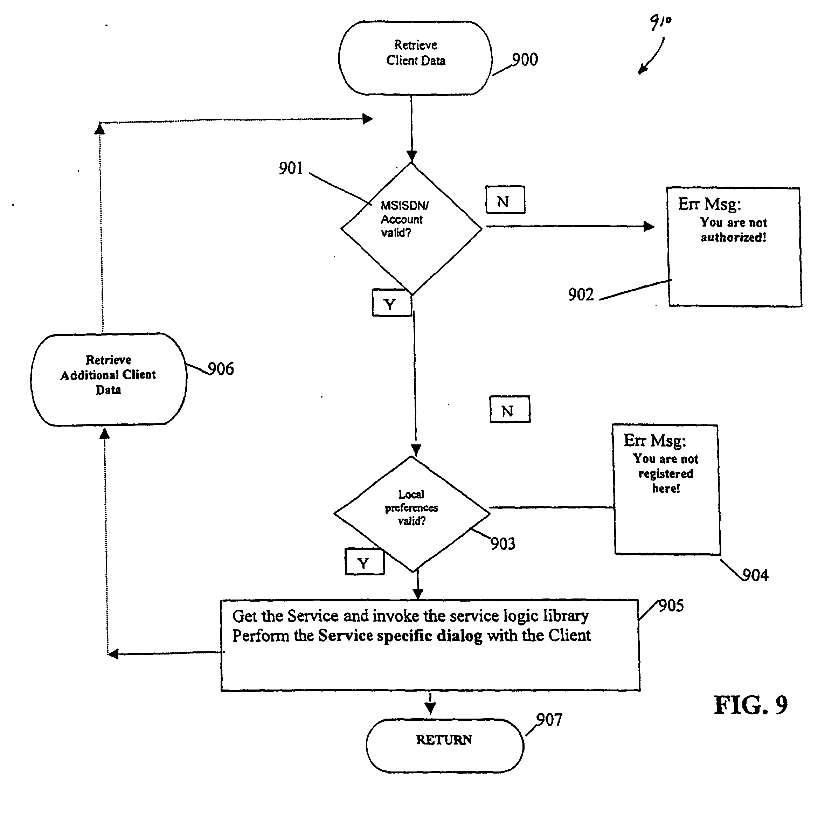

FIG. 9 is a flow diagram illustrating the steps in an exemplary method for performing a service dialog with a mobile subscriber. The method enables the client to further specify and to use the selected service by interacting with server **204**. The flow diagram also defines the authorization and consistency checks performed by the server.

Referring now to FIGs. 1-5 and 9, the routine **910** begins at step **900,** in which the server **204** retrieves client data from the client **200**. The data preferably includes the client's MSISDN and the current location given by the parameter MCC_MNC_LAC or MCC_MNC-LAC_CI (as specified in the GSM specification). In step **901,** the server **204** evaluates the client's MSISDN. According to the rules implemented in the ERM **211,** the server **204** can check if the MSISDN is attached to a valid account. If not, then the "No" branch is followed from step **901** to step **902.** An error message is sent at step **902** to the client **200,** and the routine **910** terminates. The client **200** may, for example, display a message to the user indicating that the user is not authorized to access interactive services.

If, at step **901,** the MSISDN is attached to a valid account, then the "Yes" branch is followed from step **901** to step **903**. The server **204** evaluates in step **903** the current location of the client **200,** in the form of a location area code MCC_MNC_LAC or MCC_MNC_LAC_CI. According to the ERM **211,** the server **204** checks the location preferences of the client **200,** based on the validated account and MSISDN information. If it is determined by the server **204** that the client **200** is entitled to use service in this particular geographical area, then the "Yes" branch is followed from step **903** to step **905**. The client **200** may be entitled to receive service both when the user is logged on in the user's home network as well as when the user is roaming in a foreign network.

If the server **204** determines at step **903** that the user is not entitled to use location-based services in that particular geographical location, the "No" branch is followed to step **904.** An error message is sent in step **904** indicating that the client **200** cannot proceed with the requested operation. For example, the client **200** may display a message to the user indicating that the user is not registered for service at that particular location.

Steps **900-903** are preferably completed, even though account validation and local preferences validation steps were performed in steps **500-503** of FIG. 5 and steps **700-703** of FIG. 7, because the mobile equipment **102** is typically a moving object and may have moved outside of the original location area. Moreover, the mobile equipment may have switched to a different MSISDN if the user has a multi-MSISDN GSM subscription.

At step **905**, the server **204** and the client **200** engage in a dialog to request and deliver the service selected by the client according to the ERM **211**. The server **204** executes the logic associated with the specified service. This service-specific dialog might, for example, provide a flight boarding schedule to a user located at an airport and a weather report for the user's destination city. Alternatively, the service-specific information may be pushed to the client **200** from the server **204** without requiring a client request to initiate the information transfer.

If the dialog requires additional data from the client **200** to be retrieved by the server **204**, then the routine **910** returns to step **900**. For example, an extensive dialog between the client and the server may require that substantial additional data be retrieved from the client.

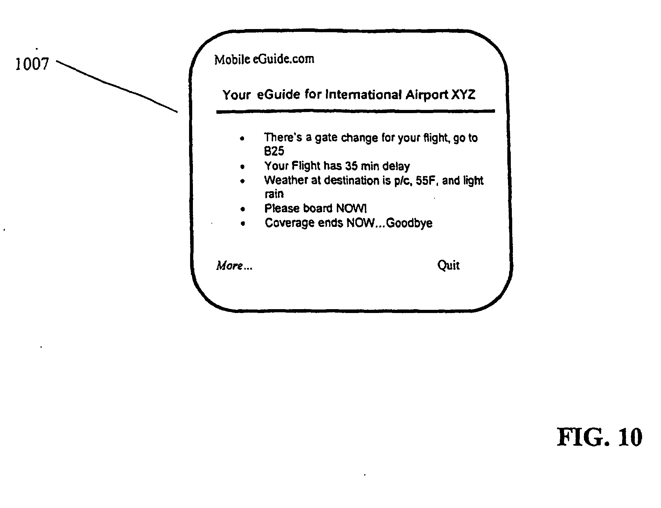

FIG. 10 illustrates a representative mobile equipment screen displaying the results of a service dialog between a server system and a mobile subscriber according to one embodiment of the invention. Referring now to FIGs. 1, 2, 9 and 10, message display **1007** shows a message rendered by server **204** for mobile equipment **102** to provide information associated with the service-specific dialog carried out between the client **200** and the server **204** at step **905** of FIG. 9. In the representative message display illustrated in FIG. 10, the information rendered includes gate change and boarding information for an airplane flight along with a destination weather report.

In view of the foregoing, it will be understood that the present invention supports registering, ordering and using location- and/or user-specific services in a client-server environment having mobile equipment operating within wireless communication cells. The client is typically a WAP-enabled GSM phone logged onto a GSM 900/1800 or PCS 1900 cellular telecommunications network. The server may be either a combination WAP gateway and standard Web server or a WAP application server. The server may be interlinked via the Internet and may have access to a database system. The database stores geographical information required for a location-based service, such as the level of rooms in a building, aisles in a store, or gates at an airport. The database also can include service-specific logic that is executed in response to a client demands. The client exploits location data that is stored on an SIM card attached to the mobile equipment. Forwarding the current location area code together with the subscriber's MSISDN to a WAP application can trigger the server to execute the application logic. The user may then select a more precise location and a service attached to that location. By using push technology, the server may deliver information to the client without receiving an information request from the client.

## Claims

1. A method for providing location specific services over a GSM/PCS standard network in a client/server environment, the client being a standard GSM/PCS mobile phone (102), the method comprising the steps of:
receiving a mobile subscription identification (MSISDN) and a location, wherein the mobile subscription identifier identifies a mobile subscription;
in response to the mobile subscription identification and the location, determining (501) whether the mobile subscription is entitled to receive a information service;
building (505) the information service based on the mobile subscription identification and the location;
delivering (505) the information service to the mobile equipment; and
providing a entity relationship model at a server (108).
wherein an entity relationship model provides at least one entity representing physical objects (218), the entity having a recursive internal structure to describe details of the represented physical objects and at least one executable service procedure (220) related to the entity, both the entity and the related service procedure linked in a one-to-many relationship to a standard user account and a location information.

2. The method of claim 1, wherein at least one entity representing physical objects (218) is a plurality of entities representing geographical items and the at least one executable service procedure (220) is a plurality of executable service procedures.

3. The method of claim 2, further comprising
providing a user specific account (212) and a location preferences (216) at the client; and
transmitting from the client to the server a user specific account and the location preferences to the server for requesting a list of entities representing geographical items which are related to the user specific account and the location preferences.

4. The method of claim 3, further comprising
receiving a list of the requested entities (606) representing geographical items from the server.

5. The method of claim 4, further comprising
selecting one of the requested entities from the list received from the server at the client; and
requesting a list of related service procedures for the selected entity from the server.

6. The method of claim 5, further comprising
providing client user data at the client the user data comprising location preferences;
transmitting client user data and the selected one of the requested entities from the client to the server;
checking the client user data and the transmitted selected one of the requested entities against the user specific account and location preferences; and
transmitting in case of a positive result a list of related service procedures to the client.

7. The method of claim 6, further comprising
transmitting a selected one of the list of related service procedures to the server; and
requesting the server to execute the logic associated with selected one service procedure.

8. The method of any of claim 1 to 7, wherein the server receives client data including a entity representing physical objects (218) and service procedure related to the entity, checks them against user preferences and - in case of a positive result - performs the logic associated with the service procedure, repeatedly performing the user preference check, because the client might be moving out of a specified range defined by the entity representing physical objects and the service procedure related to the entity.

9. A system for providing location specific services over a GSM/PCS standard network in a client/server environment comprising:
a client (200) being a standard GSM/PCS mobile phone and
a server (204), the server comprising:
service request operating means for operating on a service request from the mobile equipment;
receiving means for receiving a mobile subscription identification (MSISDN) and a location, wherein the mobile subscription identifier identifies a mobile subscription;
determining means for determining in response to the mobile subscription identification and the location whether the mobile subscription is entitled to receive a information service;
building means for building the information service based on the mobile subscription identification and the location;
delivering means for delivering the information service to the mobile equipment; and
providing means for providing an entity relationship model,
wherein an entity realtionship model is adapted to provide at least one entity representing physical objects, the entity having a recursive internal structure to describe details of the represented physical objects and at least one executable service procedure related to the entity, both the entity and the related service procedure linked in a one-to-many relationship to standard user account and location information.

## Patentansprüche

1. Verfahren zum Bereitstellen standortspezifischer Dienste über ein GSM/PCS-Standardnetz in einer Client-/Server-Umgebung, wobei der Client ein GSM/PCS-Standard-Mobiltelefon (102) ist und das Verfahren die folgenden Schritte umfasst:
Empfangen einer Mobil-Teilnehmerkennung (mobile subscription identification-MSISDN) und eines Standorts, wobei die Mobil-Teilnehmerkennung einen Mobil-Teilnehmer identifiziert;
Bestimmen (501), ob der Mobil-Teilnehmer berechtigt ist, einen Informationsdienst zu empfangen, in Antwort auf die Mobil-Teilnehmerkennung und den Standort;
Aufbauen (505) des Informationsdienstes auf Basis der Mobil-Teilnehmerkennung und des Standortes;
Liefern (505) des Informationsdienstes an die Mobileinrichtung; und
Bereitstellen eines Entitäts-Beziehungsmodells auf einem Server (108),
wobei ein Entitäts-Beziehungsmodell wenigstens eine Entität, die physische Objekte (218) darstellt, wobei die Entität eine rekursive, interne Struktur zur Beschreibung von Details der dargestellten physischen Objekte hat, und wenigstens eine ausführbare Dienstprozedur (220) bereitstellt, die mit der Entität verbunden ist, wobei sowohl die Entität als auch die damit verbundene Dienstprozedur in einer eins-zu-mehrfach Beziehung mit einem Standard-Benutzerkonto und einer Standortinformation verknüpft sind.

2. Verfahren nach Anspruch 1, wobei wenigstens eine Entität, die physische Objekte (218) darstellt, eine Vielzahl von Entitäten ist, die geografische Elemente darstellen, und die wenigstens eine ausführbare Dienstprozedur (220) eine Vielzahl ausführbarer Dienstprozeduren ist.

3. Verfahren nach Anspruch 2, das des Weiteren umfasst:
Bereitstellen eines benutzerspezifischen Kontos (212) und von Standort-Präferenzen (216) bei dem Clienten; und
Übertragen eines benutzerspezifischen Kontos sowie der Standort-Präferenzen von dem Client zu dem Server, um eine Liste von Entitäten anzufordern, die geografische Elemente darstellen, die mit dem benutzerspezifischen Konto und den Standort-Präferenzen verbunden sind.

4. Verfahren nach Anspruch 3, das des Weiteren umfasst:
Empfangen einer Liste der angeforderten Entitäten (606), die geografische Elemente darstellen, von dem Server.

5. Verfahren nach Anspruch 4, das des Weiteren umfasst:
Auswählen einer der angeforderten Entitäten aus der von dem Server bei dem Client empfangenen Liste; und
Anfordern einer Liste verbundener Dienstprozeduren für die ausgewählte Entität von dem Server.

6. Verfahren nach Anspruch 5, das des Weiteren umfasst:
Bereitstellen von Client-Benutzerdaten bei dem Client, wobei die Benutzerdaten Standort-Präferenzen umfassen;
Übertragen von Client-Benutzerdaten sowie der ausgewählten der angeforderten Entitäten von dem Client zu dem Server;
Vergleichen der Client-Benutzerdaten und der übertragenen ausgewählten einen der angeforderten Entitäten mit dem benutzerspezifischen Konto und den Standort-Präferenzen; und
bei einem positiven Ergebnis Übertragen einer Liste verbundener
Dienstprozeduren zu dem Client.

7. Verfahren nach Anspruch 6, das des Weiteren umfasst:
Übertragen einer ausgewählten der Liste verbundener Dienstprozeduren zu dem Server; und
Auffordern des Servers, die mit der ausgewählten einen Dienstprozedur zusammenhängende Logik auszuführen.

8. Verfahren nach einem der Ansprüche 1 bis 7, wobei der Server Client-Daten empfängt, die eine Entität enthalten, die physische Objekte (218) und eine Dienstprozedur darstellt, die mit der Entität verbunden ist, sie mit Benutzer-Präferenzen vergleicht und bei einem positiven Ergebnis die Logik durchführt, die mit der Dienstprozedur zusammenhängt, wobei die Prüfung der Benutzer-Präferenz wiederholt durchgeführt wird, da sich der Client möglicherweise aus einem vorgegebenen Bereich heraus bewegt, der durch die Entität definiert wird, die physische Objekte und die Dienstprozedur darstellt, die mit der Entität verbunden ist.

9. System zum Bereitstellen standortspezifischer Dienste über ein GSM/PCS-Standardnetz in einer Client-Server-Umgebung, das umfasst:
einen Client (200), der ein GSM/PCS-Standard-Mobiltelefon ist, und
einen Server (204), wobei der Server umfasst:
eine Dienstanforderungs-Bearbeitungseinrichtung, die eine Dienstanforderung von der Mobileinrichtung bearbeitet;
eine Empfangseinrichtung, die eine Mobil-Teilnehmerkennung (mobile subscription identification-MSISDN) und einen Standort empfängt, wobei die Mobil-Teilnehmerkennung einen Mobil-Teilnehmer identifiziert;
eine Bestimmungseinrichtung, die in Reaktion auf die Mobil-Teilnehmerkennung und den Standort (501) bestimmt, ob der Mobil-Teilnehmer berechtigt ist, einen Informationsdienst zu empfangen;
eine Aufbaueinrichtung, die den Informationsdienst auf Basis der Mobil-Teilnehmerkennung und des Standortes aufbaut;
eine Liefereinrichtung, die den Informationsdienst an die Mobileinrichtung liefert; und
eine Bereitstellungseinrichtung, die ein Entitäts-Beziehungsmodell bereitstellt,
wobei ein Entitäts-Beziehungsmodell so eingerichtet ist, dass es wenigstens eine Entität, die physische Objekte darstellt, wobei die Entität eine rekursive, interne Struktur zur Beschreibung von Details der dargestellten physischen Objekte hat, und wenigstens eine ausführbare Dienstprozedur bereitstellt, die mit der Entität verbunden ist, wobei sowohl die Entität als auch die damit verbundene Dienstprozedur in einer eins-zu-mehrfach Beziehung mit einem Standard-Benutzerkonto und einer Standortinformation verknüpft sind.

## Revendications

1. Procédé de fourniture de services spécifiques à un emplacement sur un réseau standard GSM/PCS dans un environnement client/serveur, le client étant un téléphone mobile standard GSM/PCS (102), le procédé comprenant les étapes consistant à :
recevoir une identification d'abonnement à un mobile (MSISDN) et un emplacement, dans lequel l'identifiant d'abonnement à un mobile identifie un abonnement à un mobile ;
déterminer (501), en réponse à l'identification d'abonnement à un mobile et à un emplacement, si l'abonnement à un mobile est autorisé à recevoir un service d'informations ;
élaborer (505) le service d'informations en se fondant sur l'identification d'abonnement à un mobile et sur l'emplacement ;
délivrer (505) le service d'informations à l'équipement mobile ; et
fournir un modèle de relations d'entité au niveau d'un serveur (108),
un modèle de relations d'entité fournissant au moins une entité représentant des objets physiques (218), l'entité ayant une structure interne récursive pour décrire des détails des objets physiques représentés et au moins une procédure de service exécutable (220) associée à l'entité, l'entité et la procédure de service associée étant liées dans une relation de « un à plusieurs » à un compte d'utilisateur standard et à une information d'emplacement.

2. Procédé selon la revendication 1, dans lequel au moins une entité représentant des objets physiques (218) est une pluralité d'entités représentant des éléments géographiques et l'au moins une procédure de service exécutable (220) est une pluralité de procédures de service exécutables.

3. Procédé selon la revendication 2, comprenant en outre les étapes consistant à
fournir un compte spécifique d'utilisateur (212) et des préférences d'emplacement (216) au niveau du client ; et
transmettre du client au serveur un compte spécifique d'utilisateur et des préférences d'emplacement pour demander une liste d'entités représentant des éléments géographiques qui sont associés au compte spécifique d'utilisateur et aux préférences d'emplacement.

4. Procédé selon la revendication 3, comprenant en outre les étapes consistant à
recevoir du serveur une liste des entités demandées (606) représentant des éléments géographiques.

5. Procédé selon la revendication 4, comprenant en outre les étapes consistant à
sélectionner au niveau du client l'une des entités demandées dans la liste reçue du serveur ; et
demander au serveur une liste de procédures de service associées pour l'entité sélectionnée.

6. Procédé selon la revendication 5, comprenant en outre les étapes consistant à
fournir au niveau du client des données d'utilisateur comprenant des préférences d'emplacement ;
transmettre les données d'utilisateur et l'entité sélectionnée parmi les entités demandés du client au serveur ;
vérifier les données d'utilisateur et l'entité sélectionnée transmise parmi les entités demandées quant au contenu spécifique et aux préférences d'emplacement d'utilisateur ; et
transmettre au client dans le cas d'un résultat positif une liste de procédures de service associées.

7. Procédé selon la revendication 6, comprenant en outre les étapes consistant à
transmettre au serveur une procédure sélectionnée choisie dans la liste des procédures de service associées ; et
demander au serveur d'exécuter la logique associée à la procédure de service sélectionnée.

8. Procédé selon l'une quelconque des revendications 1 à 7, dans lequel le serveur reçoit des données de client incluant une entité représentant des objets physiques (218) et une procédure de service attachée à l'entité, les vérifie quant aux préférences d'utilisateur et, dans le cas d'un résultat positif, effectue la logique associée à la procédure de service, réalise de façon répétée la vérification des préférences d'utilisateur, car le client pourrait s'être déplacé à l'extérieur d'une plage spécifiée définie par l'entité représentant des objets physiques et la procédure de service attachée à l'entité.

9. Système de fourniture de services spécifiques à un emplacement sur un réseau standard GSM/PCS dans un environnement client/serveur comprenant :
un client (200) qui est un téléphone mobile standard GSM/PCS
un serveur (204), le serveur comprenant :
des moyens de commande de requête de service pour commander une requête de service à partir de l'équipement mobile ;
des moyens de réception destinés à recevoir une identification d'abonnement à un mobile (MSISDN) et un emplacement, dans lequel l'identifiant d'abonnement à un mobile identifie un abonnement à un mobile ;
des moyens de détermination destinés à déterminer en réponse à l'identification d'abonnement à un mobile et à un emplacement si l'abonnement à un mobile est autorisé à recevoir un service d'informations ;
des moyens d'élaboration destinés à élaborer le service d'informations se fondant sur l'identification d'abonnement à un mobile et sur l'emplacement ;
des moyens de délivrance destinés à délivrer le service d'informations à l'équipement mobile ; et
des moyens de fourniture destinés à fournir un modèle de relations d'entités ;
un modèle de relations d'entité étant adapté à fournir au moins une entité représentant des objets physiques (218), l'entité ayant une structure interne récursive pour décrire des détails des objets physiques représentés et au moins une procédure de service exécutable associée à l'entité, l'entité et la procédure de service associée étant liées dans une relation de « un à plusieurs » à un compte d'utilisateur standard et à une information d'emplacement.
